# EUROPÄISCHE PATENTSCHRIFT

(11) **EP 0 597 561 B1**
(45) Veröffentlichungstag und Bekanntmachung des Hinweises auf die Patenterteilung: **23.12.1998**
(21) Anmeldenummer: 93250299.0
(22) Anmeldetag: 03.11.1993
(51) Int. Cl.: G05B 19/05, G06F 13/36

(54) **Übertragungssystem zum Datenaustausch**
Transfer system for data exchange
Système de transfert pour l'échange de données

(30) Priorität: 13.11.1992 DE 4238957
(43) Veröffentlichungstag der Anmeldung: 18.05.1994
(73) Patentinhaber: Hartmann & Braun GmbH & Co. KG, 65760 Eschborn (DE)
(72) Erfinder: Niemann, Karl-Heinz, D-30163 Hannover (DE); Helmut,Michel, D-30655 Hannover (DE)
(74) Vertreter: Meissner, Peter E., Dipl.-Ing.

(56) Entgegenhaltungen:
- EP-A- 0 376 738
- ELECTRONIC DESIGN Nr. 24 , 17. Oktober 1985 , NEW JERSEY,US Seite 42 C. PATTON 'Dual-bus architecture helps beat bus contention'
- 16TH ANNUAL INTERNATIONAL SYMPOSIUM ON FAULT-TOLERANT COMPUTING SYSTEMS 1. Juli 1986 , VIENNA, AU Seiten 14 - 19 T.B.SMITH 'High performance fault tolerant real time architecture'
- 11TH REAL TIME SYSTEMS SYMPOSIUM 5. Dezember 1990 , FLORIDA, US Seiten 136 - 145 SHIN AND HOU 'Analysis of three contention protocols in distributed real-time systems'
- "Buchreihe Elektrowissen Aktuell, ISBN 3-8007-1492-2, "Serielle Busse", Seiten 193-204", "Conrads et al", "VDE-Verlag, Technische Akademie Wuppertal (TAW)", "", "Offenbach", 1987

## Beschreibung

Die Erfindung betrifft ein übertragungssystem zum Datenaustausch zwischen verteilten Einrichtungen in speicherprogrammierten Steuerungen mit Rückführung über den zu steuernden Prozeß.

In Speicherprogrammierten Steuerungen zur Prozeßsteuerung werden prozeßspezifische Eingangsparameter (Meßwerte) mit vorgegebenen Prozeßparametern, sogenannten Merkern, verknüpft. Die Ergebnisse dieser Verknüpfung werden als Ausgangsparameter an Stellglieder ausgegeben, die den Ablauf des zu steuernden Prozesses in Abhängigkeit von den Eingangsparametern beeinflussen.

Die Einrichtungen der speicherprogrammierten Steuerung sind prozeßnah platziert, um die notwendigen übertragungsleitungen zwischen Meßwertgebern sowie Stellgliedern und der speicherprogrammierten Steuerung möglichst kurz zu halten.

In einem raumlich vom Prozeß getrennten sogenannten Wartenbereich sind Bedien- und Beobachtungsgeräte sowie Einrichtungen zur Konfiguration der speicherprogrammierten Steuerung vorgesehen.

Die Bedien- und Beobachtungsgeräte sowie die Einrichtungen zur Konfiguration sind untereinander und mit der speicherprogrammierten Steuerung über einen seriellen Bus verbunden. Über diesen Bus werden die Konfigurationsdaten von den Einrichtungen zur Konfiguration der speicherprogrammierten Steuerung zur speicherprogrammierten Steuerung übertragen und Meßwerte und Kontrolldaten von der speicherprogrammierten Steuerung zu den Bedien- und Beobachtungsgeräten übertragen. Darüber hinaus werden Steuerbefehle von den Bediengeräten zur speicherprogrammierten Steuerung übertragen.

Aufgrund der räumlichen Entfernung zwischen der speicherprogrammierten Steuerung und den Geräten und Einrichtungen im Wartenbereich und wegen seiner hohen Datenübertragungsrate wird für diesen im folgenden als Systembus bezeichneten Bus häufig das in der DIN/ISO 8802 Teil 3 genormte Bussystem ETHERNET verwendet.

Die speichergrogrammierte Steuerung bestent im wesentlichen aus einer zentralen Verarbeitungseinheit, die mit einem Buscontroller zum Anschluß an den Systembus und einer Mehrzahl von Eingabe- und Ausgabebaugruppen verbunden ist. An die Eingabebaugruppen sind die Meßwertgeber angeschlossen und an die Ausgabebaugruppen sind die Stellglieder angeschlossen.

Die Verarbeitungskapazität der zentralen Verarbeitungseinheit ist bauelementespezifisch begrenzt. In Abhängigkeit von der Anzahl der prozeßspezifisch erforderlichen Meßwertgeber und Stellglieder sowie der Häufigkeit ihrer zeitlich aufeinanderfolgenden Abfrage bzw. Bedienung ist es erforderlich, eine Mehrzahl von zentralen Verarbeitungseinheiten vorzusehen, die jeweils an den Systembus angeschlossen sind.

In Abhängigkeit von der prozeßspezifischen räumlichen Anordnung sind die einer Steuerungssequenz zugeordneten Meßwertgeber und Stellglieder an Eingabe- bzw. Ausgabebaugruppen verschiedener zentraler Verarbeitungseinrichtungen angeschlossen. Demzufolge sind die Meßwerte bzw. Ausgangsparameter an die jeweils andere, zuständige zentrale Verarbeitungseinheit zu ubertragen. Insbesondere bei zeitkritischen Prozessen muß diese Datenübertragung mit sogenanntem Echtzeitvernalten realisiert werden. Das heißt Zeitverzogerungen zwischen der Meßwerterfassung una der Übertragung zu der zugeordneten zentralen Verarbeitungseinheit bzw. der Stellwertgenerierung in der betreifenoen zentralen Verarbeitungseinheit und Übertragung des Stellwertes an die zentrale Verarbeitungseinneit, an deren Ausgabebaugruppe das entsprechende Stellglied angeschlossen ist, sind zu vermeiden. Daruber hinaus sind Meß- bzw. Stellwerte zwischen der jeweiligen Eingabe- bzw. Ausgabebaugruppe und der zugehörigen zentralen Verarbeitungseinheit in Echtzeit zu übertragen.

Der die zentralen Verarbeitungseinheiten verbindende Systembus ist aufgrund seines Übertragungsprotokolls zu ecntzeitenmaßigen Datenübertragung ungeeignet, weil ETHERNET an ein nonpersistentes Zugriffsverfahren gebunden ist.

In der Buchreihe Elektrowissen Aktuell, VDE-Verlag ist in dem Beitrag "Serielle Busse" von Conrads et al S. 104 angegeben, daß für bestimmte Multiprozessorenanordnungen der Austausch von Informationen zwischen den Prozessoren notwendig sei, und "da InterruptLeitungen oder der parallele Bus für eine derartige Anwendung ihre Grenzen haben, erweist sich der Einsatz einer speziellen Verbindung als nützlich".
Wie aus Bild 1, S. 193 o. g. Veröffentlichung zu entnehmen ist, sind die einzelnen Prozessoren durch einen Systembus mit nonpersistentem Zugriffsverhalten verbunden.
Des weiteren ist mindestens ein serieller Bus (Lateralbus) mit prioritätspersistentem Zugriffsverhalten vorgesehen, an dem mindestens zwei der Prozessoren (Zentraleinheiten) angeschlossen sind.
Schließlich ist jedem Prozessor ein Eingabe-/Ausgabe-Bus zugeordnet, an dem mindestens eine Eingabe-/Ausgabe-Einrichtung angeschlossen ist.

In der Schrift EP 0 376 738 kann der Bus 108 (Fig. 5) als Lateralbus angesehen werden, wenn man den Bus 124 als Systembus betrachtet (s. auch Spalte 13, Zeile 49 bis Spalte 14, Zeile 4).

Der Erfindung liegt die Aufgabe zugrunde, ein übertragungssystem zum Datenaustausch zwischen verteilten Einrichtungen in speicherprogrammierten Steuerungen anzugeben, daß einen echtzeitfähigen Datentransfer zwischen einer Mehrzahl von zentralen Verarbeitungseinheiten sowie zwischen Eingabe- bzw. Ausgabebaugruppen und der jeweils zugeordneten zentralen Verarbeitungseinheit erlaubt, ohne den Datenaustausch zwischen den zentralen Verarbeitungseinheiten und den Einrichtungen zum Beobachten, Bedienen und Konfigurieren zu behindern.

Erfindungsgemäß ist ausgehend von einem Systembus mit nonpersistentem Zugriffsverfahren, an dem alle zentralen Verarbeitungseinheiten, Bedien-, Beobachtungs- und Konfigurationseinrichtungen angeschlossen sind, mindestens ein Lateralbus vorgesehen, dessen Übertragungsprotokoll ein prioritätspersistentes Zugriffsverfahren umfaßt und an dem ausschließlich, jedoch mindestens zwei zentrale Verarbeitungseinheiten angeschlossen sind. Darüber hinaus ist jeder zentralen Verarbeitungseinheit mindestens ein weiterer Bus, dessen Übertragungsprotokoll ein prioritätspersistentes Zugriffsverfahren umfaßt, zugeordnet, an den jeweils mindestens eine Eingabe- bzw. Ausgabebaugruppe angeschlossen ist.

Dazu wird im Rahmen der Konfiguration der speicherprogrammierten Steuerung jeder zu übertragenden Information, das können Meßwerte, Stellwerte, Zwischenergebnisse oder Merker sein, ein Rang in Form einer Priorität zugeordnet.

Der Versuch mehrerer sendefähiger Einrichtungen, auf den angeschlossenen Bus zuzugreifen, endet damit stets mit der übertragung der höchstprioren Information. Auf diese Weise ist ein prioritätsabhängig echtzeitfähiger Datentransfer zwischen den an einen der Busse mit prioritätspersistentem Zugriffsverfahren angeschlossenen Einrichtungen realisierbar.

Die Erfindung wird nachstehend anhand von Zeichnungen und Ausführungsbeispielen näher erläutert. Die dazu erforderlichen Figuren zeigen:
- Fig. 1: eine Prinzipdarstellung der Anordnung und erfindungsgemäßen Verknüpfung von Komponenten einer speicherprogrammierten Steuerung,
- Fig. 2: ein Blockschaltbild einer zentralen Verarbeitungseinheit,
- Fig. 3: ein Blockschaltbild einer Eingabe-/Ausgabeeinrichtung
- Fig. 4: ein Blockschaltbild einer Eingabe-/Ausgabeeinrichtung mit Koppelfeld
- Fig. 5: eine Darstellung einer konstruktiven Ausgestaltung der Erfindung
- Fig. 6: eine Darstellung eines ausgeführten Übertragungssystems
- Fig. 7: eine Darstellung einer Variante der Erfindung
- Fig. 8: eine Darstellung der EA-Busstruktur
- Fig. 9: eine konstruktive Ausgestaltung einer zentralen Baueinheit
- Fig. 10: eine konstruktive Ausgestaltung einer peripheren Baueinheit

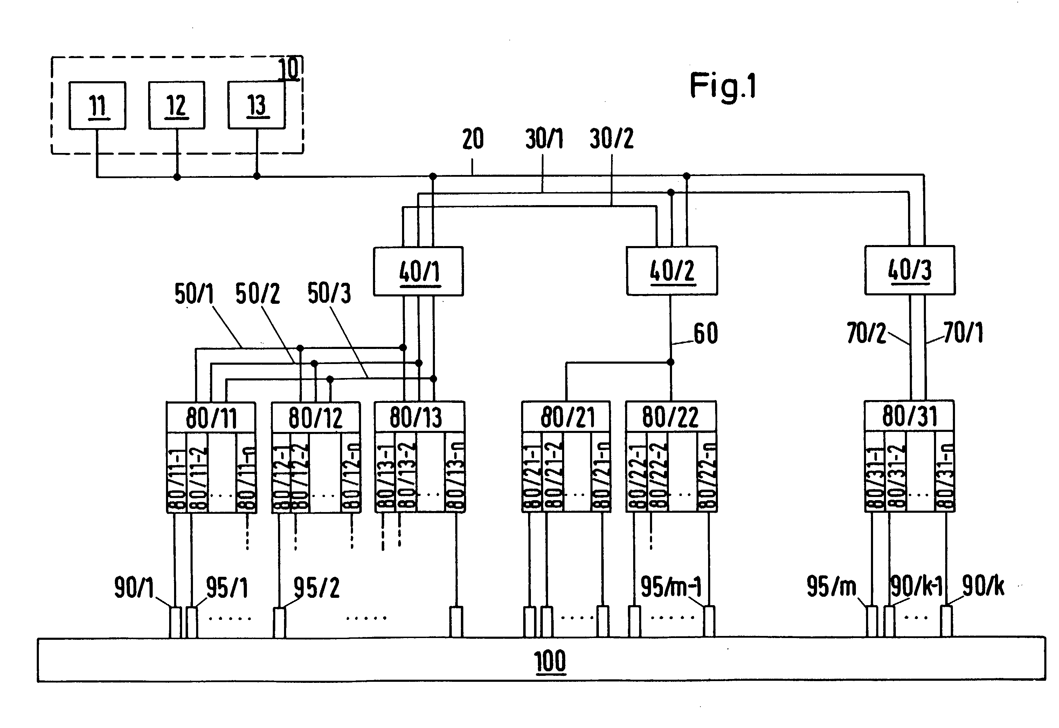

Mit einem räumlich ausgedehnten, stilisiert dargestellten Prozeß 100 sind gemäß Fig. 1 eine Anzahl k Meßwertgeber 90/1 bis 90/k und eine Anzahl m Stellglieder 95/1 bis 95/m verbunden. Jeder Meßwertgeber 90/1 bis 90/k und jedes Stellglied 95/1 bis 95/m ist an eine von n Anschlußeinheiten 80/11-1 bis 80/31-n einer nahegelegenen Eingabe-/Ausgabeeinrichtung 80/11 bis 80/31, im folgenden als EA-Einrichtungen bezeichnet, angeschlossen. Dabei wird zwischen Anschlußeinheiten für die Dateneingabe und Anschlußeinheiten für die Datenausgabe unterschieden. An die Anschlußeinheit 80/11-1 ist der Meßwertgeber 90/1 angeschlossen; die Anschlußeinheit 80/11-1 ist eine Eingabeanschlußeinheit. An die Anschlußeinheit 80/11-2 ist das Stellglied 95/1 angeschlossen: die Anschlußeinheit 80/11-2 ist eine Ausgabeanschlußeinheit.

Mindestens einer EA-Einrichtung 80 ist in Abhängigkeit von der Anzahl und der zeitlichen Aufeinanderfolge von Funktionssequenzen eine zentrale Verarbeitungseinheit 40 zugeordnet. In der Fig. 1 sind beispielhaft aus der Vielzahl möglicher Kombinationen drei Zuordnungen von EA-Einrichtungen 80 zu zentralen Verarbeitungseinheiten 40 gezeigt.

Die zentrale Verarbeitungseinheit 40/1 ist über drei parallel verlaufende, serielle Busse 50/1, 50/2 und 50/3, die im folgenden als EA-Busse bezeichnet werden, mit drei EA-Einrichtungen 80/11, 80/12 und 80/13 verbunden. Eine derart ausgestaltete Verknüpfung ist besonders zweckmäßig, wenn eine Vielzahl von Daten in kürzester Zeit zwischen den verschiedenen Anschlußeinheiten 80/11-1 bis 80/13-n und der zentralen Verarbeitungseinheit 40/1 zu übertragen sind und die Funktionssequenzen nur einfache Befehlsfolgen sind, d. h. wenn der Umfang der Datenübertragung gegenüber dem Umfang der Datenverarbeitung überwiegt.

Jeder der drei EA-Busse 50/1, 50/2 und 50/3 ist mit jeder der zentralen Verarbeitungseinheit 40/1 zugeordneten EA-Einrichtungen 80/11, 80/12 und 80/13 verbunden. Damit ist sichergestellt, daß bedarfsweise sowohl von allen angeschlossenen EA-Einrichtungen 80/11, 80/12, 80/13 gleichzeitig Daten gesendet bzw. empfangen werden können als auch bei entsprechender Anforderung von einer der EA-Einrichtungen 80/11, 80/12 oder 80/13 über alle EA-Busse 50/1, 50/2 und 50/3 gleichzeitig gesendet bzw. empfangen werden kann. Darüber hinaus können die Datenübertragungsrichtungen der einzelnen EA-Busse 50/1, 50/2 und 50/3 zum Datentransfer zwischen einer der EA-Einrichtungen 80/11, 80/12 und 80/13 auch aufgeteilt werden, so daß auf zwei EA-Bussen, beispielsweise 50/1 und 50/2. Daten von der zentralen Verarbeitungseinheit 40/1 zu der entsprechenden EA-Einrichtung, beispielsweise 80/12, übertragen werden und gleichzeitig Daten von der EA-Einrichtung 80/12 über den EA-Bus 50/3 zur zentralen Verarbeitungseinheit 40/1 übertragen werden oder umgekehrt.

Die zentrale Verarbeitungseinheit 40/2 ist über einen EA-Bus 60 mit zwei EA-Einrichtungen 80/21 und 80/22 verbunden. Eine derart gestaltete Verknüpfung ist besonders geeignet, wenn zur Steuerung von Teilen des Prozesses 100 eine Reihe von Meßwertgebern 90 und Stellgliedern 95 anzuschließen sind, deren Umfang der Datenübertragung gering ist im Vergleich zur Datenverarbeitung in der zentralen Verarbeitungseinheit 40/2. Meßwerte von den einzelnen EA-Einrichtungen 80/21 und 80/22 und Stellwerte zu den EA-Einrichtungen 80/21 und 80/22 können separat aufeinanderfolgend übertragen werden.

Die zentrale Verarbeitungseinheit 40/3 ist über zwei parallel verlaufende EA-Busse 70/1 und 70/2 mit einer einzigen EA-Einrichtung 80/31 verbunden. Diese Konfiguration ist dann besonders vorteilhaft, wenn prozessual bedingt trotz vergleichsweise geringer anschließbarer Anzahl n von Meßwertgebern 90 und Stellgliedern 95 in Summe der Umfang der Datenübertragung und der Umfang der Datenverarbeitung gleichermaßen intensiv sind. Über beide EA-Busse 70/1 und 70/2 können gleichzeitig Meßwerte von der EA-Einrichtung 80/31 zur zentralen Verarbeitungseinheit 40/3 oder Stellwerte von der zentralen Verarbeitungseinheit 40/3 zur EA-Einrichtung 80/31 übertragen werden. Darüber hinaus können gleichzeitig über einen der EA-Busse, beispielsweise 70/1, Meßwerte zur zentralen Verarbeitungseinrichtung 40/3 und über den anderen EA-Bus 70/2 Stellwerte zur EA-Einrichtung 80/31 übertragen werden.

Die EA-Busse 50/1 bis 70/2 sind Bussysteme mit einem Übertragungsprotokoll, das eine prioritätspersistenten Zugriff der angeschlossenen Sender auf den Bus gestattet, wobei unter Sender die an die jeweiligen EA-Busse 50, 60 oder 70 angeschlossenen zentralen Verarbeitungseinheiten 40 und EA-Einrichtung 80 zu verstehen sind. Vorzugsweise werden für die EA-Busse 50/1 bis 70/2 Bussysteme nach dem CAN-Standard entsprechend dem Normentwurf ISO/DIS 11898 eingesetzt.

Jeder EA-Einrichtung 80/11 bis 80/31 sind jeweils eine Anzahl von Anschlußeinheiten 80/11-1 bis 80/31-n zugeordnet, wobei der Übersichtlichkeit halber in Fig. 1 dieser EA-Einrichtung 80/11 bis 80/31 genau n Anschlußeinheiten 80/11-1 bis 80/11-n .... 80/31-1 bis 80/31-n zugeordnet sind. Im Rahmen der konkreten Realisierung der Erfindung ist die Anzahl n einer EA-Einrichtung, beispielsweise 80/11, zugeordneten Anschlußeinheiten, in diesem Falle 80/11-1 bis 80/11-n, von konstruktiven Vorgaben und Randbedingungen abhängig und kann von EA-Einrichtung zu EA-Einrichtung unterschiedlich sein.

Die zentralen Verarbeitungseinheiten 40/1 bis 40/3 sind darüber hinaus an einen Systembus 20 angeschlossen, an den im Wartenbereich 10 gemäß Fig. 1 je eine Konfigurationseinrichtung 11, eine Bedieneinrichtung 12 und eine Beobachtungseinrichtung 13 angeschlossen sind. Für diese Einrichtungen 11, 12 und 13 werden üblicherweise Personalcomputer eingesetzt. In Abhängigkeit vom zu steuernden Prozeß kann es zweckmäßig sein, die funktionelle Zuordnung der Einrichtungen 11, 12 und 13 im Wartenbereich zu kombinieren. So ist es möglich, die Bedienung und Beobachtung geräteseitig funktionell zusammenzufassen, so daß ein oder mehr kombinierte Bedien-/Beobachtungseinrichtungen 12, 13 an den Systembus 20 angeschlossen sind. Wenn der zu steuernde Prozeß 100 es zuläßt, kann auch die Konfiguration der speicherprogrammierten Steuerung von einer Bedien-/Beobachtungseinrichtung aus vorgenommen werden.

An den Systembus 20 werden hohe Anforderungen hinsichtlich der Datenübertragungsrate gestellt, wobei der deterministische Zusammenhang zwischen dem die Busanforderung auslosenden Ereignis und der tatsächlichen Datenübertragung von untergeordneter Bedeutung ist. Demzufolge ist ein Bussystem mit nonpersistentem Zugriffsverhalten, wie das als DIN/ISO 8802 Teil 3 genormte ETHERNET, als Systembus 20 geeignet.

Darüber hinaus ist in Fig. 1 ein erster Lateralbus 30/1 dargestellt, an den alle zentralen Verarbeitungseinheiten 40/1 bis 40/13 angeschlossen sind, und ein zweiter Lateralbus 30/2, an den die zentralen Verarbeitungseinheiten 40/1 und 40/2 angeschlossen sind. Diese Lateralbusse 30/1 und 30/2 weisen ein Übertragungsprotokoll mit prioritätspersistentem Zugriffsverhalten auf und dienen der echtzeitgemäßen Datenübertragung zwischen den einzelnen zentralen Verarbeitungseinheiten 40/1 bis 40/3.

In Abhängigkeit vom Umfang der zwischen den zentralen Verarbeitungseinheiten 40 zu übertragenden Daten werden ein oder mehr Lateralbusse 30 vorgesehen.

Für eine in Fig. 1 dargestellte speichergrogrammierte Steuerung ist prozeßspezifisch ein hohes Datenübertragungsvolumen zwischen den zentralen Verarbeitungseinheiten 40/1 und 40/2 zu erwarten. Demgemäß sind die zentralen Verarbeitungseinheiten 40/1 und 40/2 über zwei Lateralbusse 30/1 und 30/2 verbunden. Demgegenüber ist zwischen der zentralen Verarbeitungseinheit 40/3 und den zentralen Verarbeitungseinheiten 40/1 und 40/2 prozeßspezifisch ein vergleichsweise geringes Datenübertragungsvolumen zu erwarten, so daß der Anschluß der zentralen Verarbeitungseinheit 40/3 an einen der Lateralbusse 30/1 und 30/2 den Anforderungen genügt. Gemäß Fig. 1 ist die zentrale Verarbeitungseinheit 40/3 an den Lateralbus 30/1 angeschlossen.

Zur Veranschaulichung der Notwendigkeit zeitlich determinierter Datenübertragung zwischen den zentralen Verarbeitungseinheiten 40/1 bis 40/3 wird der Informationsfluß an folgendem Beispiel erläutert.

Die Erzeugung einer Steuersequenz ist in der zentralen Verarbeitungseinheit 40/1 vorgesehen. Ein durch diese Steuersequenz ansprechbares Stellglied ist das Stellglied 95/1, eine Datenquelle für diese Steuersequenz ist der Meßwertgeber 90/k. Der Meßwertgeber 90/k ist an die Eingabeanschlußeinheit 80/31-n angeschlossen, die über die EA-Busse 70/1 und 70/2 mit der zentralen Verarbeitungseinheit 40/3 verbunden ist. Das Stellglied 95/1 ist an die Ausgabeanschlußeinheit 80/11-2 angeschlossen, die über die EA-Busse 50/1 bis 50/3 mit der zentralen Verarbeitungseinheit 40/1 verbunden ist. Das bedeutet, die Meßwertinformation ist vom Meßwertgeber 90/k über die Eingabeanschlußeinheit 80/31-n der EA-Einrichtung 80/31, über einen der EA-Busse 70/1 oder 70/2, über die zentrale Verarbeitungseinheit 40/3 und über den Lateralbus 30/1 zur zentralen Verarbeitungseinheit 40/1 zu übertragen, und zwar in Abhängigkeit von der ihr zugeordneten Priorität möglichst verzögerungsfrei. In der zentralen Verarbeitungseinheit 40/1 wird diese Meßwertinformation verarbeitet und eine Stellwertinformation generiert. Diese Stellwertinformation wird entsprechend der ihr zugeordneten Priorität über einen der EA-Busse 50/1 bis 50/3 zur EA-Einrichtung 80/11 übertragen, die die Ausgabeanschlußeinheit 80/11-2 umfaßt. Dieser vorgang läßt insgesamt den Systembus 20, auf den gleichzeitig Datenpakete von bzw. zu Einrichtungen im Wartenbereich 10 übertragbar sind, unberührt.

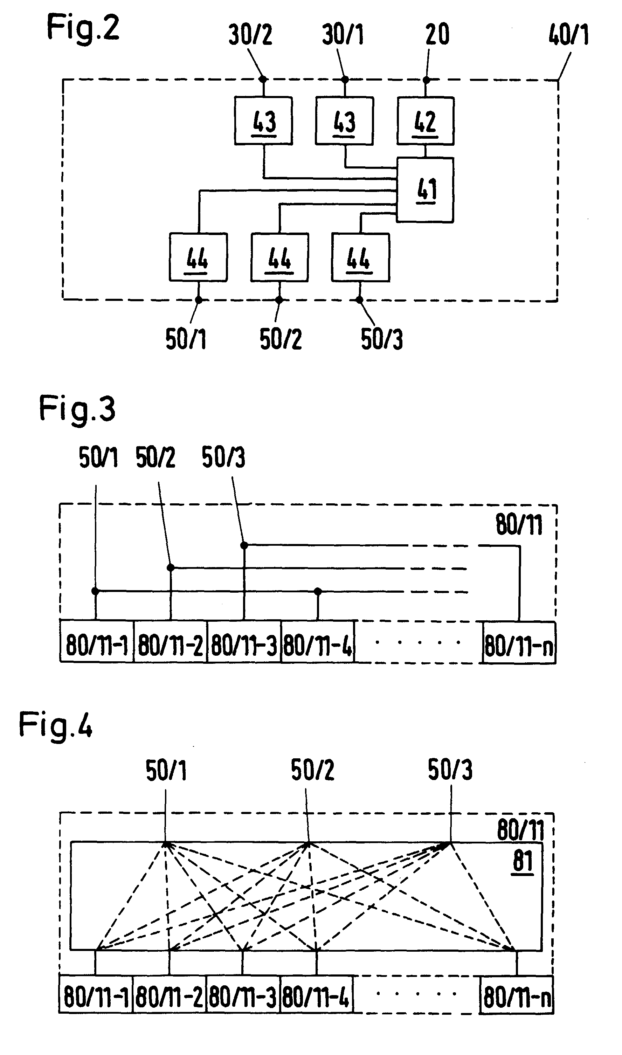

In Fig. 2 ist ein Blockschaltbild einer zentralen Verarbeitungseinheit 40 am Beispiel der zentralen Verarbeitungseinheit 40/1 dargestellt. Ein Hauptbestandteil dieser zentralen Verarbeitungseinheit 40 ist der Rechenkern 41, an den jeweils ein Systembuscontroller 42 angeschlossen ist. Der Systembuscontroller 42 ist mit dem Systembus 20 verbunden. Darüber hinaus sind an den Rechenkern 41 die Lateralbuscontroller 43 und die EA-Buscontroller 44 angeschlossen.

Für die in Fig. 2 gezeigte zentrale Verarbeitungseinheit 40/1 sind zwei identische Lateralbuscontroller 43, an die jeweils einer der Lateralbusse 30/1 und 30/2 angeschlossen ist, und drei identische EA-Buscontroller 44 vorgesehen, an die jeweils einer der ER-Busse 50/1 bis 50/3 angeschlossen ist.

Die zentrale Verarbeitungseinheit 40/2 (vgl. Fig. 1) weist zwei Lateralbuscontroller 43 zum Anschluß an die Lateralbusse 30/1 und 30/2 auf. Jedocn ist nur ein EA-Buscontroller 44 zum Anschluß an den EA-Bus 60 erforderlich.

Die zentrale Verarbeitungseinheit 40/3 (vgl. Fig. 1) weist einen Lateralbuscontroller 43 zum Anschluß an den Lateralbus 30/1 und zwei ER-Buscontroller 44 auf, an die jeweils einer der EA-Busse 70/1 und 70/2 angeschlossen ist.

In Fig. 3 ist eine erste Variante eines Blockschaltbildes einer ER-Einrichtung 80 am Beispiel der ER-Einrichtung 80/11 gezeigt. Die ER-Einrichtung 80/11 weist n Anschlußeinheiten 80/11-1 bis 80/11-n zum Anschluß von nicht dargestellten Meßwertgebern und Stellgliedern auf und ist an die drei EA-Busse 50/1 bis 50/3 angeschlossen. Gemäß Fig. 3 ist jede der Anschlußeinheiten 80/11-1 bis 80/11-n an einen der EA-Busse 50/1 bis 50/3 angeschlossen. Vorzugsweise sind dabei die Anschlußeinheiten 80/11-1 bis 80/11-n gleichmaßig auf die EA-Busse 50/1 bis 50/3 verteilt. Beispielsweise kann jede dritte Anschlußeinheit an denselben EA-Bus angeschlossen sein.

Prozeßbedingt kann es auch zweckmäßig sein, in Abhängigkeit von den zu übertragenden Datenvolumen die Anschlußeinheiten 80/11-1 bis 80/11-n ungleichmäßig auf die EA-Busse 50/1 bis 50/3 zu verteilen.

In jedem Fall ist jeder Anschlußeinheit 80/11-1 bis 80/11-n einer der EA-Busse 50/1 bis 50/3 fest zugeordnet.

In weiterer Ausgestaltung der Erfindung ist in Fig. 4 eine zweite Variante eines Blockschaltbildes einer EA-Einrichtung 80 am Beispiel der EA-Einrichtung 80/11 gezeigt. Die EA-Einrichtung 80/11 weist unverändert n Anschlußeinheiten 80/11-1 bis 80/11-n zum Anschluß von nichtdargestellten Meßwertgebern und Stellgliedern auf und ist an die drei EA-Busse 50/1 bis 50/3 angeschlossen. Darüber hinaus ist jedoch die EA-Einrichtung 80/11 mit einem Koppelfeld 81 ausgestattet, an das alle EA-Busse 50/1 bis 50/3 und alle Anschlußeinheiten 80/11-1 bis 80/11-n angeschlossen sind. Über dieses Koppelfeld 81 ist jeder EA-Bus 50/1 bis 50/3 mit jeder Anschlußeinheit 80/11-1 bis 80/11-n verbindbar.

Somit ist die Datenübertragung über jeden angeschlossenen EA-Bus 50/1 bis 50/3 von und zu jeder Anschlußeinheit 80/11-1 bis 80/11-n möglich.

Diese Ausführungsform ist zur übertragung zeitkritischer Daten besonders vorteilhaft, weil hochpriore Busanforderungen der Anschlußeinheiten 80/11-1 bis 80/11-n auf die Anzahl angeschlossener EA-Busse 50/1 bis 50/3 verteilbar sind.

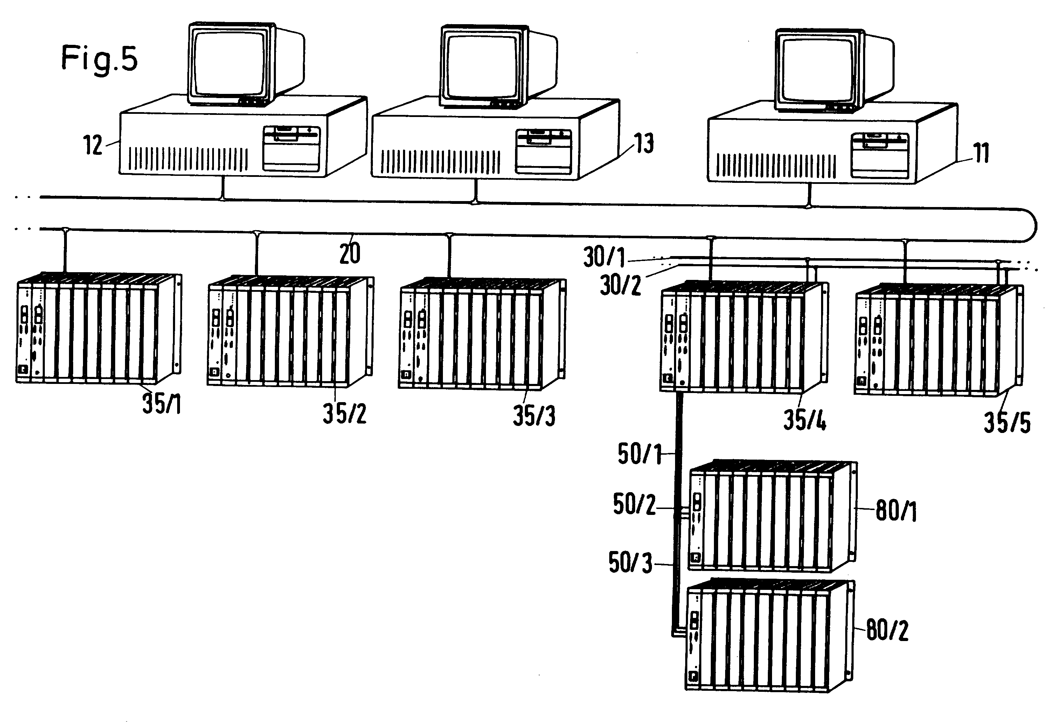

Im Rahmen der konstruktiven Ausgestaltung von speicherprogrammierten Steuerungen werden logische Funktionseinheiten physisch zu Baueinheiten zusammengefaßt, die in einem Gefäßsystem angeordnet sind. Vorzugsweise werden für speicherprogrammierte Steuerungen Baugruppenträger vorgesehen, die mit einer Reine von physischen Baueinheiten bestückt werden. Jeder Baugruppenträger weist eine Anzahl von Steckplätzen auf, die in Abhängigkeit von der ihm zugeordneten logischen Funktion mit verschiedenen physischen Baugruppen ausgerüstet sind. In einer realisierten Ausführungsform sind Baugruppenträger für die 19 Zoll-Einbautechnik (DIN 41494 Teil 1) mit jeweils 10 Steckplätzen vorgesehen. Zweckmäßigerweise sind gemäß Fig. 5 als physische Baueinheiten Steuereinheiten 35 und EA-Einrichtungen 80 vorgesehen.

In Fig. 5 ist eine speicherprogrammierte Steuerung gezeigt, die aus fünf Steuereinheiten 35/1 bis 35/5 besteht, die über einen Systembus 20 im einer Konfigurationseinrichtung 11 und zwei kombinierten Bedien- und Beobachtungseinrichtungen 12, 13 verbunden sind. Die Steuereinheiten 35/4 und 35/5 sind darüber hinaus über zwei Lateralbusse 30/1 und 30/2 miteinander verbunden. Über drei EA-Busse 50/1 bis 50/3 sind an die Steuereinheit 35/4 zwei EA-Einrichtungen 80/1 und 80/2 angeschlossen.

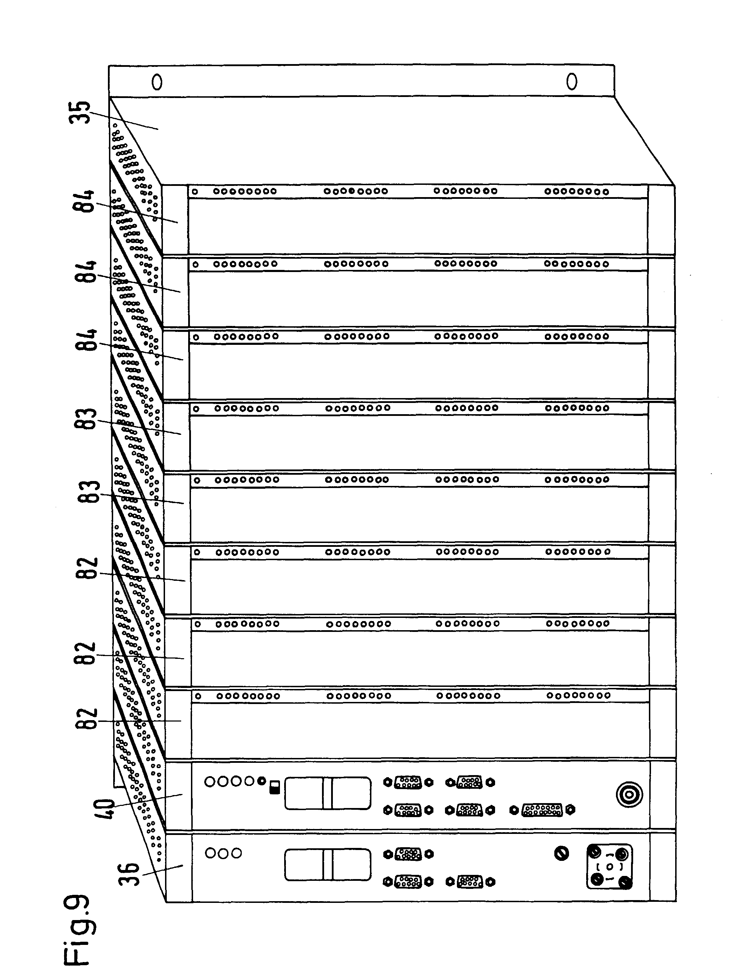

Jede Steuereinheit 35/1 bis 35/5 weist gemäß Fig. 9 eine Anschaltbaugruppe 36, eine zentrale Verarbeitungseinheit 40 sowie acht Anschlußeinheiten auf. Die in Fig. 9 gezeigte Steuereinheit 35 weist beispielsweise drei analoge Ausgangsanschlußeinheiten 82, zwei digitale Ausgangsanschlußeinheiten 83 und drei digitale Eingangsanschlußeinheiten 84 auf, an die jeweils Stellglieder bzw. Meßwertgeber anschließbar sind.

Über die Anschaltbaugruppe 36 wird die Steuereinheit 35 mit Energie versorgt. Darüber hinaus sind die EA-Busse 50/1 bis 50/3 für den Anschluß der EA-Einrichtungen 80 über die Anschaltbaugruppe 36 an die zentrale Verarbeitungseinheit 40 angeschlossen.

Die der Steuereinrichtung 35 physisch zugeordneten Anschlußeinheiten 82, 83 und 84 sind eine logische EA-Einrichtung 80 gemäß Fig. 1 und über EA-Busse 50/1 bis 50/3 mit der zentralen Verarbeitungseinheit 40 verbunden.

Bei fester Zuordnung von drei EA-Bussen 50/1 bis 50/3 zu den Anschlußeinheiten 82, 83 und 84 und bei gleichmäßigem Datentransfer von bzw. zur zentralen Verarbeitungseinheit 40 sind zwei EA-Busse 50/1 und 50/2 jeweils drei Anschlußeinheiten, beispielsweise dem EA-Bus 50/1 die drei analogen Ausgangsanschlußeinheiten 82 und dem EA-Bus 50/2 die drei digitalen Eingangsanschlußeinheiten 84, zugeordnet und dem dritten EA-Bus 50/3 sind die zwei restlichen Anschlußeinheiten, beispielsweise die zwei digitalen Ausgangsanschlußeinheiten 83, zugeordnet. Prinzipiell ist die Zuordnung der EA-Busse 50/1 bis 50/3 zu den Anschlußeinheiten 82, 83 und 84 prozeßabhängig frei wählbar.

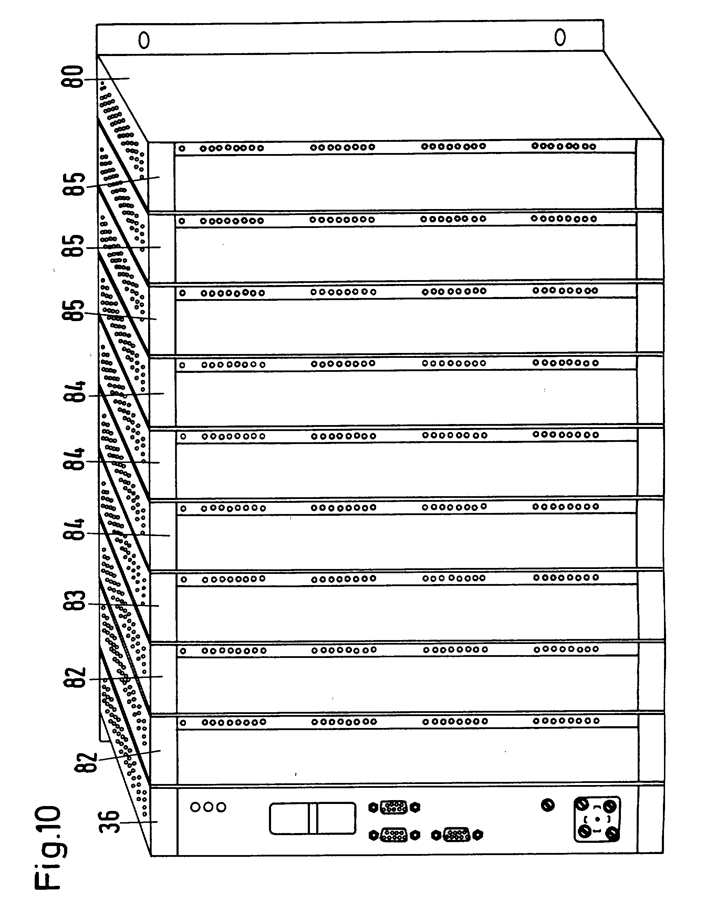

Zur Erweiterung der speicherprogrammierten Steuerung sind gemäß Fig. 5 EA-Einrichtungen 80/1 und 80/2 vorgesehen, die physisch abgesetzte, separate Baueinheiten bilden. Jede dieser EA-Einrichtungen 80/1 und 80/2 weisen gemäß Fig. 10 eine Anschaltbaugruppe 36 und neun Anschlußeinheiten auf. In Fig. 10 sind zwei analoge Ausgangsanschlußeinheiten 82, eine digitale Ausgangsanschlußeinheit 83, drei digitale Eingangsanschlußeinheiten 84 und drei analoge Eingangsanschlußeinheiten 85 dargestellt. Die EA-Busse 50/1 bis 50/3 sind an die Anschaltbaugruppe 36 geführt. Von der Anschaltbaugruppe 36 sind die EA-Busse 50/1 bis 50/3 auf die Anschlußeinheiten 82 bis 85 verteilt.

Bei drei EA-Bussen 50/1 bis 50/3 und bei gleichmäßigem Datentransfer von und zu der zentralen Verarbeitungseinheit 40 sind jeweils drei Anschlußeinheiten einem EA-Bus zugeordnenbar. Beispielsweise sind die Ausgangsanschlußeinheiten 82 und 83 an den EA-Bus 50/1, die digitalen Eingangsanschlußeinheiten 84 an den EA-Bus 50/2 und die analogen Eingangsanschlußeinheiten 85 an den dritten EA-Bus 50/3 angeschlossen.

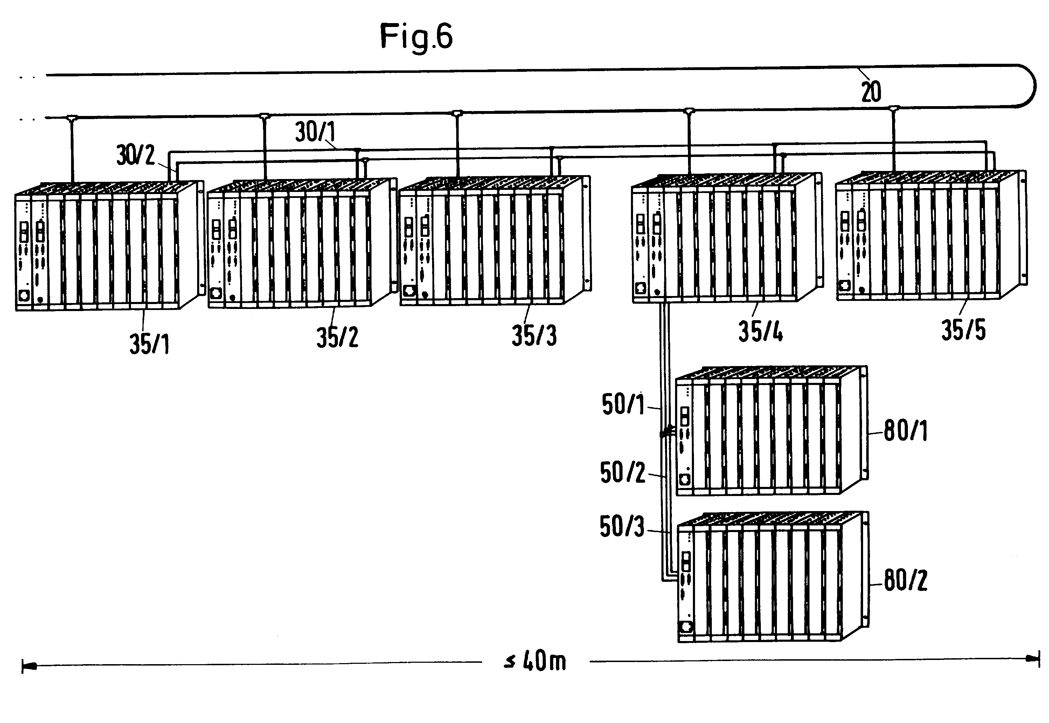

Eine weitere Ausgestaltung der Erfindung ist in Fig. 6 gezeigt. Es sind fünf Steuereinheiten 35/1 bis 35/5 vorgesehen, die jeweils sowohl an den Systembus 20 als auch an zwei Lateralbusse 30/1 und 30/2 angeschlossen sind. An eine der Steuereinheiten 35/1 bis 35/5, an die Steuereinheit 35/4, sind zwei EA-Einrichtungen 80/1 und 80/2 über drei EA-Busse 50/1 bis 50/3 angeschlossen. Es ist jedoch möglich, auch jede andere Steuereinheit 35/1 bis 35/3 und 35/5 prozeßspezifisch mit abgesetzten EA-Einrichtungen 80 zu erweitern. Als Lateralbusse 30/1 und 30/2 sind Bussysteme nach dem CAN-Standard entsprechend dem Normentwurf ISO/DIS 11898 vorgesehen, so daß die Steuereinheiten 35/1 bis 35/5 örtlich getrennt bis zu einer gesamten Kabellänge der Lateralbusse 30/1 und 30/2 von jeweils 40 m anordnenbar sind.

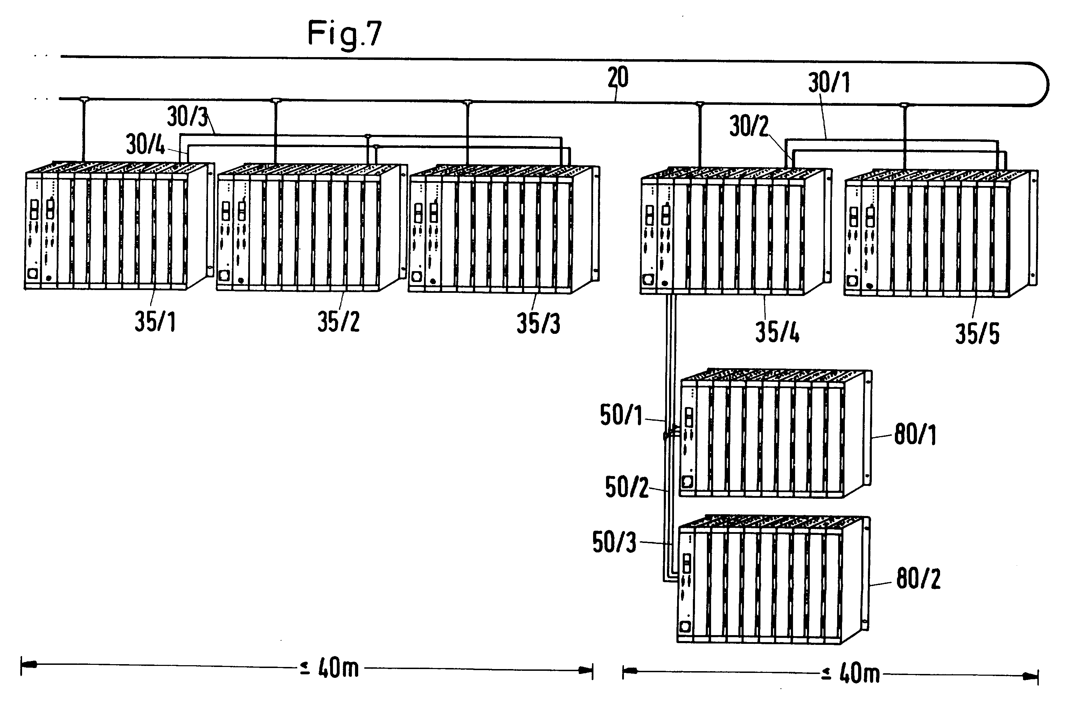

In weiterer Ausgestaltung der Erfindung ist gemäß Fig. 7 vorgesehen, die an einen Systembus 20 angeschlossene Steuereinheit 35/1 bis 35/5 in Gruppen einzuteilen. Jede Gruppe von Steuereinheiten ist separat über voneinander getrennte Lateralbusse verbunden. Gemäß Fig. 7 ist eine erste Gruppe aus den Steuereinheiten 35/1 bis 35/3 gebildet, die an die Lateralbusse 30/3 und 30/4 angeschlossen sind. Eine zweite Gruppe ist durch die Steuereinheiten 35/4 und 35/5 gebildet, die an die Lateralbusse 30/1 und 30/2 angeschlossen sind. Bei Verwendung von Bussystemen nach dem CAN-Standard für die Lateralbusse 30/1 bis 30/4 sind die an den jeweiligen Lateralbus gruppenweise angeschlossenen Steuereinheiten 35/1 bis 35/3 sowie 35/4 und 35/5 bis zu einer Kabellänge von jeweils 40 m voneinander separierbar.

Jede Steuereinheit 35/1 bis 35/5 ist wie am Beispiel der Steuereinheit 35/4 gezeigt, durch externe EA-Einrichtungen 80/1 und 80/2 erweiterbar, die über EA-Busse 50/1 bis 50/3 an die jeweilige Steuereinheit 35/1 bis 35/5 angeschlossen sind. Der zusätzliche Abstand zwischen den Gruppen von Steuereinheiten 35/1 bis 35/3 sowie 35/4 und 35/5 ist durch das verwendete Bussystem des Systembusses 20 bestimmt.

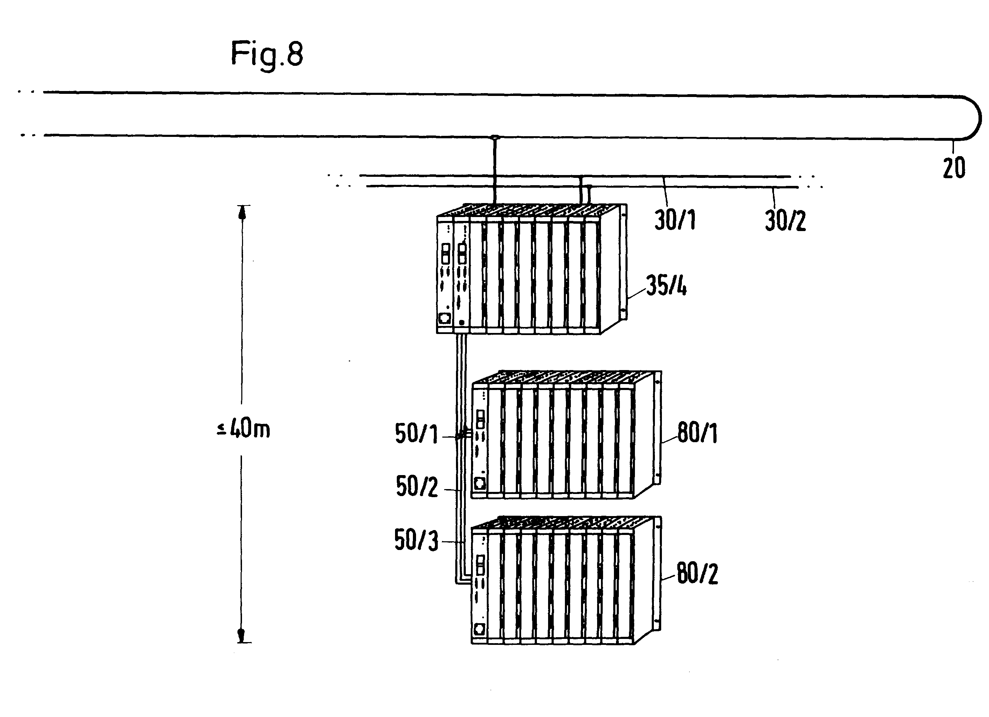

In Fig. 8 ist eine Steuereinheit 35/4 dargestellt, die an einen Systembus 20 und zwei Lateralbusse 30/1 und 30/2 angeschlossen ist. Die Steuereinheit 35/4 ist über drei parallel angeordnete EA-Busse 50/1 bis 50/3 mit zwei abgesetzten EA-Einrichtungen 80/1 und 80/2 verbunden. Die EA-Busse 50/1 bis 50/3 sind Bussysteme mit prioritätspersistentem Zugriffsverfahren. Vorzugsweise werden Bussysteme nach dem CAN-Standard verwendet. Vorteilhafterweise sind die einer Steuereinheit 35/4 zugeordneten EA-Einrichtungen 80/1 und 80/2 bis zu einer Gesamtkabellänge für die jeweiligen EA-Busse 50/1 bis 50/3 von 40 m von der Steuereinheit 35/4 entfernt plazierbar.

### Bezugzeichenliste

- 10: Wartenbereich
- 11: Konfigurationseinrichtung
- 12: Bedieneinrichtung
- 13: Beobachtungseinrichtung
- 20: Systembus
- 30, 30/1 bis 30/4: Lateralbusse
- 35, 35/1 bis 35/5: Steuereinheiten
- 36: Anschaltbaugruppe
- 40, 40/1 bis 40/3: zentrale verarbeitungseinheiten
- 41: Rechenkern
- 42: Systembuscontroller
- 43: Lateralbuscontroller
- 44: EA-Buscontroller
- 50, 50/1 bis 50/3 ) 60 ): EA-Busse
- 70, 70/1, 70/2 ) 80, 80/11 bis 80/31: EA-Einrichtungen
- 80/11-1 bis 80/31: -n Anschlußeinheiten
- 81: Koppel feld
- 82: analoge Ausgangsanschlußeinheiten
- 83: digitale Ausgangsanschlußeinheiten
- 84: digitale Eingangsanschlußeinheiten
- 85: analoge Eingangsanschlußeinheiten
- 90,: 90/1 bis 90/k Meßwertgeber
- 95, 95/1 bis 95/m: Stellglieder
- 100: Prozeß

## Patentansprüche

1. Übertragungssystem zum Datenaustausch zwischen verteilten Einrichtungen in speicherprogrammierten Steuerungen zur Prozeßsteuerung, wobei die verteilten Einrichtungen die in einem vom zu steuernden Prozeß (100) abgegrenzten Wartenbereich (10) angeordnete Einrichtungen zum Konfigurieren (11), Bedienen (12) und Beobachten (13) sowie mindestens zwei zentrale Verarbeitungseinheiten (40) umfassen, wobei
- an die zentralen Verarbeitungseinheiten (40) mindestens jeweils eine Eingabe-/Ausgabe-Einrichtung (80) angeschlossen ist und
- die in einem Wartenbereich (10) angeordneten Einrichtungen zum Konfigurieren (11), Bedienen (12) und Beobachten (13) über einen Systembus (20) mit den zentralen Verarbeitungseinheiten (40) verbunden sind,
**dadurch gekennzeichnet,**
- daß der Systembus (20) ein nonpersistentes Zugriffsverhalten aufweist,
- daß mindestens ein Lateralbus (30) mit prioritätspersistentem Zugriffsverhalten vorgesehen ist, an dem mindestens zwei der zentralen Verarbeitungseinheiten (40) angeschlossen sind und
- daß an jeder der zentralen Verarbeitungseinheiten (40) mindestens ein separater Eingabe-/Ausgabe-Bus (50, 60, 70) angeschlossen ist, der prioritätspersistentes Zugriffsverhalten aufweist und an den mindestens eine Eingabe-/Ausgabe-Einrichtung (80) mit Anschlußeinheiten (80/11-1 bis 80/31-n) zum Anschluß von Meßwertgebern (90) und Stellgliedern (95) von dem zu steuernden Prozeß (100) angeschlossen ist.

2. Übertragungssystem nach Anspruch 1,
dadurch gekennzeichnet,
daß die zentralen Verarbeitungseinheiten (40) in Gruppen einteilbar sind, woDei jeder Gruppe jeweils mindestens ein separater Lateralbus (30) zugeordnet ist, an den die zentralen Verarbeitungseinheiten (40) der jeweiligen Gruppe angeschlossen sind.

3. Übertragungssystem nach einem der Ansprüche 1 und 2,
dadurch gekennzeichnet,
daß jede Eingabe-/Ausgabe-Einrichtung (80) eine Anzahl n Anschlußeinheiten (80/11-1 bis 80/31-n) aufweist, die mit mindestens einem Eingabe-/Ausgabe-Bus (50, 60, 70) verbindbar ist.

4. Übertragungssystem nach Anspruch 3,
dadurch gekennzeichnet,
daß jede Anschlußeinheit (80/11-1 bis 80/31-n) einem Eingabe-/Ausgabe-Bus (50/1 bis 70/2) fest zugeordnet ist.

5. Übertragungssystem nach Anspruch 3,
dadurch gekennzeichnet,
daß jede Anschlußeinheit (80/11-1 bis 80/31-n) einer Eingabe-/Ausgabe-Einrichtung (80/11 bis 80/31) mit jedem an die Eingabe-/Ausgabe-Einrichtung (80/11 bis 80/31) angeschlossenen Eingabe/Ausgabe-Bus (50/1 bis 70/2) verbindbar ist.

## Claims

1. A transmission system for data exchange between distributed devices in stored-program controllers for process control, wherein the distributed devices comprise the devices for configuration (11), operation (12) and observation (13), which are arranged in a control zone (10) delimited by the process (100) to be controlled, and at least two central processing units (40), wherein
- in each case at least one input/output device (80) is connected to the central processing units (40) and
- the devices for configuration (11), operation (12) and observation (13) arranged in a control zone (10) are connected via a system bus (20) to the central processing units (40),
characterised in that
- the system bus (20) has a non-persistent access characteristic,
- at least one lateral bus (30) with a priority-persistent access characteristic is provided, to which at least two of the central processing units (40) are connected and
- at least one separate input/output bus (50, 60, 70) with a priority-persistent access characteristic is connected to each of the central processing units (40), which input/output bus (50, 60, 70) is connected to at least one input/output device (80) comprising connection units (80/11-1 to 80/31-n) for the connection of measured value sensors (90) and control elements (95) from the process (100) to be controlled.

2. A transmission system according to Claim 1,
characterised in that the central processing units (40) can be divided into groups, each group in each case being associated with at least one separate lateral bus (30) to which the central processing units (40) of the respective group are connected.

3. A transmission system according to one of Claims 1 and 2, characterised in that each input/output device (80) comprises a number n of connection units (80/11-1 to 80/31-n) which can be connected to at least one input/output bus (50, 60, 70).

4. A transmission system according to Claim 3,
characterised in that each connection unit (80/11-1 to 80/31-n) is permanently assigned to an input/output bus (50/1 to 70/2).

5. A transmission system according to Claim 3,
characterised in that each connection unit (80/11-1 to 80/31-n) of an input/output device (80/11 to 80/31) can be connected to each input/output bus (50/1 to 70/2) connected to the input/output device (80/11 to 80/31).

## Revendications

1. Système de transmission pour l'échange de données entre des dispositifs répartis dans des commandes par programmes enregistrés en vue de la commande de processus, les dispositifs répartis comprenant les dispositifs agencés dans une zone de contrôle (10) limitée par le processus à commander (100) et destinés à la configuration (11), à l'exploitation (12) et à l'observation (13) et au moins deux unités centrales de traitement (40),
- dans lequel il est raccordé aux unités centrales de traitement (40) à chaque fois au moins un dispositif d'entrée/sortie (80) et
- dans lequel les dispositifs agencés dans une zone de contrôle (10) et destinés à la configuration (11), à l'exploitation (12) et à l'observation (13) sont reliés par l'intermédiaire d'un bus de système (20) aux unités centrales de traitement (40),
caractérisé en ce que
- le bus de système (20) a un comportement d'accès non persistant,
- il est prévu au moins un bus latéral (30) qui a un comportement d'accès persistant à priorité et auquel au moins deux des unités centrales de traitement (40) sont raccordées, et
- il est raccordé à chacune des unités centrales de traitement (40) au moins un bus d'entrée/sortie (50, 60, 70) séparé qui a un comportement d'accès persistant à priorité et auquel est raccordé au moins un dispositif d'entrée/sortie (80) comportant des unités de raccordement (80/11-1 à 80/31-n) pour le raccordement de capteurs de valeurs de mesure (90) et d'organes de réglage (95) du processus à commander (100).

2. Système de transmission selon la revendication 1, caractérisé en ce que les unités centrales de traitement (40) peuvent être divisées en groupes, chaque groupe étant associé à au moins un bus latéral (30) séparé auquel les unités centrales de traitement (40) du groupe respectif sont raccordées.

3. Système de transmission selon l'une des revendications 1 ou 2, caractérisé en ce que chaque dispositif d'entrée/sortie (80) comporte un nombre n d'unités de raccordement (80/11-1 à 80/31-n) qui peuvent être reliées à au moins un bus d'entrée/sortie (50, 60, 70).

4. Système de transmission selon la revendication 3, caractérisé en ce que chaque unité de raccordement (80/11-1 à 80/31-n) est associée de manière fixe à un bus d'entrée/sortie (50/1 à 70/2).

5. Système de transmission selon la revendication 3, caractérisé en ce que n'importe quelle unité de raccordement (80/11-1 à 80/31-n) d'un dispositif d'entrée/sortie (80/11 à 80/31) peut être reliée à n'importe quel bus d'entrée/sortie (50/1 à 70/2) raccordé au dispositif d'entrée/sortie (80/11 à 80/31).
